**Europäisches Patentamt**

**European Patent Office**

**Office européen des brevets**

(19)

(11) Veröffentlichungsnummer : **0 081 807 B2**

(12) NEUE EUROPÄISCHE PATENTSCHRIFT

(45) Veröffentlichungstag der neuen Patentschrift :
04.12.91 Patentblatt 91/49

(51) Int. Cl.$^5$ : **B60Q 9/00**

(21) Anmeldenummer : 82111367.7

(22) Anmeldetag : 08.12.82

(54) Schaltungsanordnung zur optischen Anzeige von Zustandsgrössen.

(30) Priorität : 12.12.81 DE 3149291

(43) Veröffentlichungstag der Anmeldung :
22.06.83 Patentblatt 83/25

(45) Bekanntmachung des Hinweises auf die
Patenterteilung :
18.06.86 Patentblatt 86/25

(45) Bekanntmachung des Hinweises auf die
Entscheidung über den Einspruch :
04.12.91 Patentblatt 91/49

(84) Benannte Vertragsstaaten :
DE FR GB IT SE

(56) Entgegenhaltungen :
DE-A- 2 433 025

(56) Entgegenhaltungen :
DE-A- 2 555 828
DE-A- 2 836 872
GB-A- 1 427 133
U. Tietze/Ch. Schenk "Halbleiter- Schaltungstechnik", Springer-Verlag, Berlin-Heidel-
berg-New York, 1976, Seite 551

(73) Patentinhaber : ROBERT BOSCH GMBH
Postfach 50
W-7000 Stuttgart 1 (DE)

(72) Erfinder : Haubner, Georg
Ludwigstrasse 1
W-8431 Berg (DE)
Erfinder : Petermann, Hans
Klintstrasse 6c
W-8500 Nürnberg (DE)
Erfinder : Zöbl, Hartmut
Moststrasse 25
W-8510 Fürth (DE)

EP 0 081 807 B2

## Beschreibung

Stand der Technik

Die Erfindung geht aus von einer Schaltungsanordnung zur optischen Anzeige von Zustandsgrößen im Kraftfahrzeug nach der Gattung des Hauptanspruchs. Bei einer bekannten Schaltungsanordnung dieser Art werden von einem Ringzähler verschiedene Sensoren zyklisch abgefragt. die bestimmte Zustandsgrößen im Kraftfahrzeug messen und als elektrische Größe augeben. Die gemessenen Größen werden als elektrische Signale in zeitlicher Folge über eine Logikschaltung an verschiedene Leuchtdioden ausgegeben, und dadurch wird der Zustand der einzelnen von den Sensoren überwachten Einrichtungen optisch angezeigt (DE-A-25 55 828). Diese Lösung hat vor allem den Nachteil, daß für jede Leuchtdiode eine Steuerleitung zu der zentral angeordneten Logikschaltung geführt werden muß. Außerdem können bei dieser Schaltungsanordnung nur Zustandsgrößen erfaßt werden, die eine Ein- oder Ausstellung signalisieren. Kontinuierlich veränderbare Zustandsgrößen wie beispielsweise Fahrgeschwindigkeit, Tank. füllung und dgl. können mit dieser Schaltungsanordnung nicht angezeigt werden.

Mit der vorliegenden Lösung wird angestrebt, möglichst viele durch Sensoren zu messende Zustandsgrößen im Kraftfahrzeug in einer Logikschaltung zusammenzufassen und als in zeitlicher Folge auftretende Signale über möglichst wenig Steuerleitungen an die Anzeigelemente weiterzuleiten.

Vorteile der Erfindung

Die erfindungsgemäße Schaltungsanordnung mit den kennzeichnenden Merkmalen des Hauptanspruchs hat den Vorteil, daß die gemessenen Zustandsgrößen als elektrische Signale in zyklischer Folge auf eine Informationsleitung gegeben werden können. welche von den Schieberegistern der verschiedenen Anzeigeblöcke aufgenommen und über die Ausgangsstufen auf die Anzeigeelemente ausgegeben werden. Als weiterer Vorteil ist anzusehen. daß für die Logikschaltung ein Mikrocomputer verwendet werden kann. an dessen Eingang für sämtliche Fahr. zeugtypen je nach Bedarf die verschiedensten Sensoren direkt oder über AD-Wandler anzuschließen sind. Dementsprechend können auch mehr oder weniger viele Anzeigeblocks mit Anzeigeelementen im Cockpit des Fahrzeuges angeordnet werden, ohne daß dafür zusätzliche Steuerleitungen erforderlich sind.

Durch die in den Unteransprüchen aufgeführten Maßnahmen sind vorteilhafte Weiterbildungen und Verbesserungen der im Hauptanspruch angegebenen Merkmale möglich.

Zeichnung

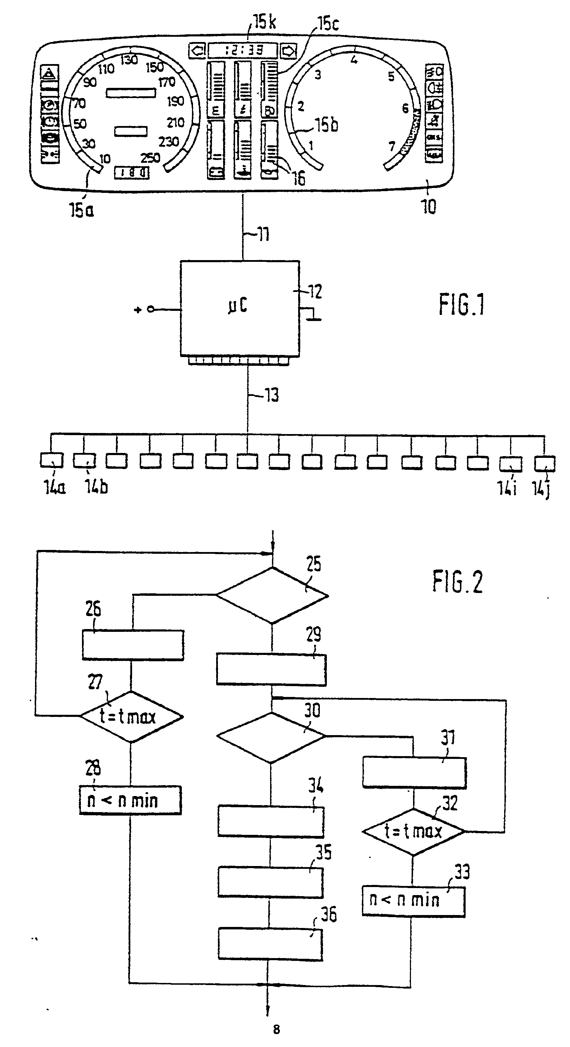

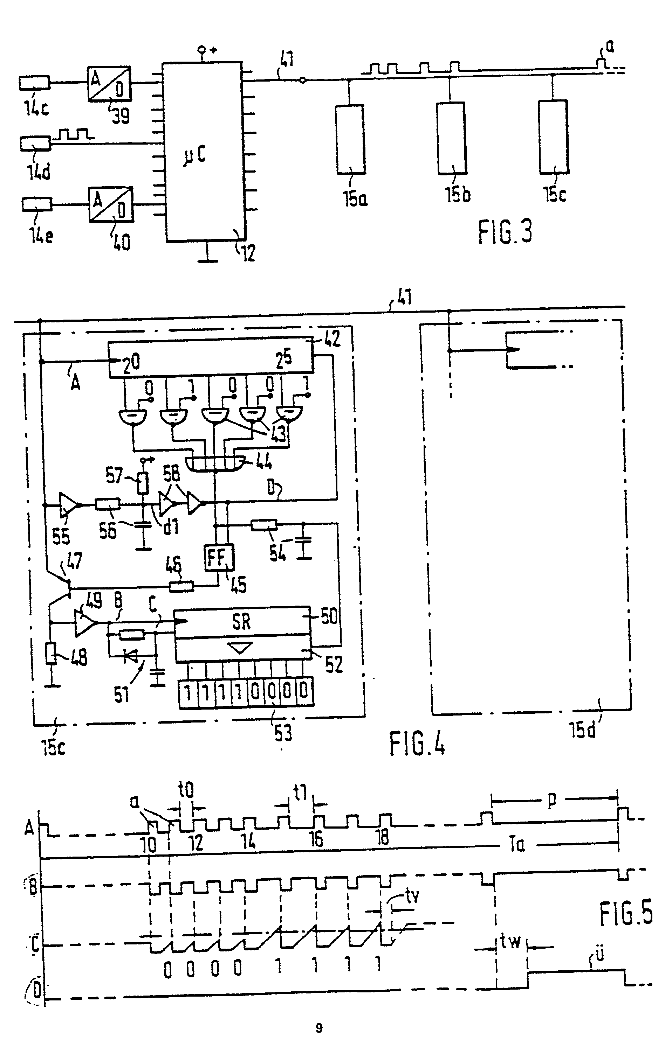

Ein Ausführungsbeispiel der Erfindung ist in der Zeichnung dargestellt und in der nachfolgenden Beschreibung näher erläutert. Es zeigen Figur 1 die erfindungsgemäße Schaltungsanordnung in einem Blockschaltbild mit einer Displayscheibe, einem Mikrocomputer zur Signalverarbeitung und einer Vielzahl von Sensoren zur Messung von Zustandsgrößen im Kraftfahrzeug, Figur 2 zeigt ein Flußdiagramm des Mikrocomputers zur Erfassung und Anzeige der Motordrehzahl, Figur 3 zeigt ein Blockschaltbild der erfindungsgemäßen Schaltungsanordnung mit einer Informationsleitung und parallel zueinander angeschlossenen Anzeigeblocks, Figur 4 zeigt den Schaltungsaufbau eines an der Informationsleitung angeschlossenen Anzeigeblocks und Figur 5 zeigt die Impulsfolge an verschiedenen Schaltungspunkten des Anzeigeblocks nach Figur 4.

Beschreibung der Ausführungsbeispiele

Das in Figur 1 dargestellte Blockschaltbild der erfindungsgemäßen Schaltungsanordnung umfaßt eine Displayscheibe 10, die im Cockpit eines Kraftfahrzeuges, vorzugsweise hinter dem Lenkrad anzuordnen ist. Über ein mehradriges Kabel 11 ist die Displayscheibe 10 an eine Versorgungsspannung sowie an den Ausgang einer Logikschaltung angeschlossen, die durch einen Mikrocomputer 12 realisiert ist. Der Mikrocomputer 12 ist eingangsseitig über ein Kabel 13 oder über einzelne Leitungen mit einer Vielzahl von Sensoren 14a bis 14j verbunden. Auf der Displayscheibe 10 sind einzelne Anzeigeblocks 15a bis 15k angeordnet. in denen jeweils mehrere Anzeigeelemente 16 für eine oder mehrere Zustandsgrößen zusammengefaßt sind. Auf der Rückseite der Displayscheibe 10 sind ferner die den Anzeigeblocks 15a-k zugeordneten Ausgangsstufen mit den Anzeigeelementen 16 räumlich vereinigt. Zur Anzeige einer kontinuierlich veränderbaren Zustandsgröße sind die Anzeigeelemente 16 eines Anzeigeblocks 15c in Form eines Anzeigebandes nebeneinander angeordnet.

Mit Hilfe des in Figur 2 dargestellten Flußdiagrammes zur Messung der Motordrehzahl soll die Ein- und Ausgabe der von den Sensoren 14a-j gemessenen Zustandsgrößen durch den Mikrocomputer 12 näher erläutet werden. Dabei zeigt Figur 2 das Flußdiagramm für den speziell zur Drehzahlmessung des Kraftfahrzeugmotors verwendeten Programmausschnitt.

In einem ersten Programmschritt 25 wird der für die Drehzahl des Motors vorgesehene Sensor 14b abgefragt. Dieser Sensor 14b gibt in Abhängigkeit von der Motordrehzahl eine sich verändernde Impulsfrequenz ab. Ist beim Programmschritt 25 kein Drehzahlimpuls vorhanden, wird im folgenden Programmschritt 26 ein Zählregister um 1 erhöht. Im folgenden Programmschritt 27 wird geprüft, ob das Zählregister einen vorgegebenen Maximalwert erreicht hat. Falls nicht, werden die Programmschritte 25, 26, 27 so oft durchlaufen, bis dieser Wert erreicht ist. Danach wird im Programmschritt 28 der Drehzahlwert 0 ausgegeben. Das bedeutet, daß der Motor stillsteht. In einem nachfolgenden Programm schritt kann nun der nächste Sensor abgefragt werden. Tritt dagegen im Programmschritt 25 am Drehzahlsensor 14 b ein Impuls auf, so wird im Programmschritt 29 ein Drehzahlzähler gestartet. Im Schritt 30 wird geprüft, ob vom Drehzahl sensor 14b ein weiterer Impuls eingegangen ist. Falls nicht, wird im Programmschritt 31 ein Zählregister um 1 erhöht und im Schritt 32 wird der Stand dieses Zählregisters überprüft. Auch hier wird die Programmschleife mit den Schritten 30, 31 und 32 wiederholt durchlaufen und beim Erreichen eines vorbestimmten Zählerstandes im Zählregister wird im Programmschritt 33 ein Mindestwert 1 ausgegeben, der anzeigt, daß der Motor die gewünschte Leerlaufdrehzahl nicht überschritten hat. Tritt jedoch beim wiederholten Durchlauf der Programmschleite 30, 31, und 32 ein erneuter Drehzahlimpuls auf, so wird im Schritt 34 der Drehzahlzähler gestoppt. Im Schritt 35 wird der Stand des Drehzahlzählers abgelesen. Er gibt an, welche Zeit zwischen zwei aufeinanderfolgenden Drehzahlimpulsen vergangen ist. Der Zählerstand ist dabei unmittelbar umgekehrt proportional zur Motordrehzahl. Im Programmschritt 36 wird nun mit Hilfe des Zählerstandes über eine im Speicher des Mikrocomputers 12 enthaltene Tabelle ein Zahlenwert abgelesen, der nun als Teil n einer Impulsfolge Ta auf eine Informationsleitung 21 gegeben wird. In ähnlicher Weise können nachfolgend sämtliche Signale an den Sensoren 14a-j verarbeitet und in der Impulsfolge Ta ausgegeben werden.

In Figur 3 ist ein Sensor 14c für den Füllstand des Kraftstofftanks eines Kraftfahrzeuges über einen AD-Wandler 39 mit einem Eingang des Mikroprozessors 12 verbunden. Ein Sensor 14d für die Fahrgeschwindigkeit des Fahrzeuges ist unmittelbar an einem Eingang des Mikroprozessors 12 und ein weiterer Sensor 14e für die Temperatur des Motors ist über einen AD-Wandler 40 mit einem weiteren Eingang des Mikroprozessors verbunden. Alle weiteren eingangsseitig mit dem Mikroprozessor 12 verbundenen Sensoren des Kraftfahrzeuges sind nicht dargestellt. Der Ausgang des Mikroprozessors 12 ist bei diesem Ausführungsbeispiel nur über eine Informationsleitung 41 mit den Anzeigeblöcken 15a-k auf der Displayscheibe 10 verbunden. Darüber hinaus sind die Anzeigeblocks noch gemeinsam an eine nicht dargestellte Versorgungsspannung angeschlossen. Erfindungsgemäß sind die Schieberegister der Anzeigeblocks 15a-j zueinander parallel mit der Informationsleitung 41 verbunden. Die dort zyklisch auftretende, in Figur 5 dargestellte Impulsfolge Ta besteht aus Taktimpulsen a, aus kleinen Impulspausen t0, aus größeren Impulspausen t1 und einer noch größeren Impulspause p zur Synchronisation der Anzeigeblocks.

Figur 4 zeigt den Schaltungsaufbau des Anzeigeblocks 15c. Die Schaltung enthält einen fünfstufigen Binärzähler 42, dessen Eingang an die Informationsleitung 41 angeschlossen ist und dessen fünf Ausgänge jeweils an einem Eingang eines exclusiven ODER-Gatters 43 liegen. Der andere Anschluß dieser fünf exclusiven ODER-Gatter 43 ist durch eine sogenannte Pin-Codierung auf eine logische 0 oder 1 gelegt. Die exclusiven ODER-Gatter 43 sind ausgangsseitig auf ein NOR-Gatter 44 gelegt, dessen Ausgang mit dem Setzeingang eines Flipflops 45 verbunden ist. Der Ausgang des Flipflops 45 ist über einen Widerstand 46 mit der Basis eines pnp-leitenden Transistors 47 verbunden, der emitterseitig ebenfalls an die Informationsleitung 41 angeschlossen ist. Der Kollektoranschluß des Transistors 47 ist einerseits über einen Widerstand 48 gegen Masse geschaltet und andererseits über einen Inverter 49 mit dem Takteingang eines Schieberegisters 50 verbunden. Der Ausgang des Inverters 49 ist ferner an eine aus Widerstand. Diode und Kondensator gebildete Zeitstufe 51 angeschlossen, die mit dem Informationseingang des Schieberegisters 50 verbunden ist. Den Parallelausgängen des achtstufigen Schieberegisters 50 sind Ausgangsverstärker 52 nachgeschaltet, deren Ausgänge mit acht LCD-Anzeigeelementen 53 verbunden sind. Der Ausgang des NOR-Gatters 44 ist ferner über ein RC-Zeitglied 54 mit dem Steuereingang der Ausgangverstärker 52 verbunden. Zur Synchronisation der Anzeigeblocks ist ferner ein Inverter 55 mit der Informationsleitung 41 verbunden, der ausgangsseitig an eine weitere RC-Zeitstufe 56 angeschlossen ist. Der Ausgang dieser Zeitstufe 56 liegt einerseits über einen Widerstand 57 an Pluspotential und andererseits über zwei in Reihe geschaltete Inverter 58 an die Rücksetzeingänge des Flipflops 45 und des Binärzählers 42.

Zur Erläuterung der Wirkungsweise der Schaltungsanordnung nach Figur 4 ist in Figur 5 die Impulsverarbeitung an verschiedenen Punkten dieser Schaltung wiedergegeben. Die auf der Informationsleitung 41 vom Mikrocomputer 12 zyklisch ausgegebene Impulsfolge Ta erscheint auch im Punkt A am Eingang des Binärzählers 42. Mit jedem Impuls a wird der Binärzähler 42 weitergeschaltet. Durch die eingetragene Kodierung der exclusiven ODER-Gatter 43 in Figur 4 ist festgelegt, daß erst der 18. Impuls auf der Informationsleitung 41 über den Ausgang des Binärzählers 42 alle Gatter 43 und das NOR-Gatter 44 auf H schaltet und damit das Flipflop 45 setzt. Folglich wird erst mit dem 18. Impuls der Transistor 47 über den Ausgang des Flipflops 45 gesperrt. Die davorliegenden Impulse auf der Informationsleitung 41 gelangen über den transistor 47 auf den Inverter 49. Im Punkt B der Schaltung tritt daher der am Takteingang des Schieberegisters 50 wirksame Impulsverlauf auf. Die Zeitstufe 51 mißt die Impulsbreite der Impulse im Punkt B bzw. die Impulse a auf der Informationsleitung 41. Der in Figur 5 dargestellte Verlauf im Punkt C der Schaltung an Ausgang der Zeitstufe 51 zeigt, daß bei kleinen Impulspausen t0 auf der Informationsleitung 41 die Zeitstufe 51 ein 0-Signal auf den Informationseingang des Schieberegisters 50 gibt und bei größeren Impulspausen t1 ein 1-Signal. Diese Informationen werden in das Schieberegister 50 eingelesen.

Mit Beginn des 18. Impulses auf der Informationsleitung 41 befinden sich in den vorderen vier Speicherzellen des Schieberegisters 50 die vier 1-Signale und in den vier hinteren Speicherzellen die 0-Signale. Über das Flipflop 45 wird nun der Transistor 47 gesperrt und nach einer Zeitverzögerung tv wird über die Zeitstufe 54 ein Übernahmeinpuls auf den Steuereingang der Ausgangsverstärker 52 gegeben. Damit wird der Inhalt des Schieberegisters 50 ausgelesen, in den Ausgangsverstärkern 52 gespeichert und an die Anzeigeelemente 53 ausgegeben. Die vier unteren Anzeigeelemente 53 im Anzeigeblock 15c in Figur 1 zeigen nun an, daß der Kraftstofftank noch halb gefüllt ist.

Gegen Ende der Impulsfolge Ta tritt eine Synchronisationspause p auf, die über die Zeitstufe 56 erfaßt wird. Dabei erscheint am Ausgang des Inverters 55 während dieser Zeit ein L-Signal, so daß über den Widerstand 57 die Zeitstufe 56 die Inverter 58 umschalten kann. Es tritt daher am Ausgang der Inverter 58 im Punkt D der Schaltung nach einer Zeitverzögerung tw ein Übernahmeinpuls ü auf, durch den sowohl der Binärzähler 42 als auch das Flipflop 45 zurückgesetzt wird. Der beschriebene Vorgang kann nun mit Beginn einer neuen Impulsfolge Ta wiederholt werden.

Die übrigen Anzeigeblocks aus Figur 1 sind in gleicher Weise aufgebaut. Durch eine geeignete Kodierung der exclusiven ODER-Gatter 43 ist sichergestellt, daß jeder Anzeigeblock nur einen bestimmten Teil n der Impulsfolge Ta auf der Informationsleitung 41 auf seine Anzeigeelemente 53 ausgibt. Durch die Codierung des Zählerausgangs auf die Zahl 18 im Anzeigeblock 15c werden die acht davor liegenden Impulspausen ausgewertet und über daß Schieberegister 50 und die Ausgangsverstärker 52 mit dem 18. Impuls auf das die Anzeigeelement 53 ausgegeben. Wird im benachbarten Anzeigeblock 15d der Ausgang des Binärzählers auf die Zahl 26 codiert, so werden dort in gleicher Weise die acht vor dem 26. Impuls der Impulsfolge Ta liegenden Pausen als eine weitere Zustandsgröße ausgewertet und auf die Anzeigeelemente 53 des Anzeigeblocks 15d ausgegeben. Die Binärzähler der Anzeigeblocks 15a-k werden somit zeitlich nacheinander ihre Schieberegister 50 abrufen und deren Inhalt ausgeben, während sie durch die Impulspause p auf der Informationsleitung 41 gleichzeitig zurückgesetzt und damit synchronisiert werden.

Durch die Verwendung eines Mikrocomputers als zentrale Logikschaltung ist es möglich, Umrechnungstabellen für bestimmte Sensoren, die als Standardausrüstung in jedem Fahrzeug einzubauen sind, in einem ROM abzuspeichern, während Umrechnungstabellen für Sensoren, die wahlweise im Fahrzeug eingebaut werden, in einem EPROM oder RAM mit Hintergrundspeicher abgelegt sind. Diese Tabellen können dann bei einer Umrüstung des Fahrzeuges wieder geändert bzw. überschrieben werden. Außerdem können in einem Anzeigeblock auch mehrere Zustandsgrößen angezeigt werden. So kann beispielsweise im Anzeigeblock 15k aus Figur 1 sowohl die Uhrzeit als auch der Zustand der Blinkanlage angezeigt werden. Für eine Standardausführung sind beispielsweise der Geschwindigkeitsmesser, Kilometerzähler, Benzinstand, der Öldruck, die Motortemperatur und die Batterieladung auf der Displayscheibe 10 anzuzeigen sowie das Blinklicht, das Fernlicht, das Warnblinken, die Handbremse und die Gurtschalter zu überwachen. Weitere Zustandsgrößen wie Motordrehzahl, Parklicht, Airbag-Lampenkontrollen und dgl. können wahlweise mit angeschlossen werden. Falls für die Informations- und Taktleitung Lichtleiter anstelle elektrischer Leiter verwendet, müssen am Mikrocomputer 12 sowie auf der Displayscheibe 10 entsprechende Optokoppler vorgesehen werden. Außerdem können die Sensoren für den Tankinhalt, die Motortemperatur und andere über einen größeren Bereich veränderbare Zustandsgrößer direkt an den Eingang des Mikrocomputers 12 angeschlossen werden, wenn die AD-Wandler in ihm integriert sind. Durch die Verwendung des Mikrocomputers kann außerdem in vorteilhafterweise der über die standardausführung hinausghende Bereich der Anzeige durch eine Pin-Programmierung des Speichers erfolgen. Der Mikroprozessor wird vom Kraftfahrzeughersteller an einem ihm angenehmen Platz im Fahrzeug angeordnet bzw. dort wo die kürzesten Leitungsverbindungen zu den verschiedenen Sensoren zustande kommen.

Die Schieberegister, Zähler und Ausgangsverstärker der einzelnen Anzeigeblocks sind an der Rückseite der Displayscheibe 10 an einer nicht sichtbaren Stelle befestig und mit den Leiterbahnen kontaktiert. Dadurch ergibt sich eine sehr flache Bauweise im Cockpit des Fahrzeuges. Falls es aus Gründen der Ersatzteil-Lagerhaltung und Reparaturfreundlichkeit erforderlich ist, die Displayscheibe 10 in kleinere Displayeinheiten zu unterteilen, werden diese Displayeinheiten jeweils durch eine steckbare Leiterverbindung für die Informations leitung sowie für die Spannungsversorgung und Masseleitung versehen.

## Patentansprüche

1. Schaltungsanordnung zur optischen Anzeige von Zustandsgrößen im Kraftfahrzeug durch optoelektrische Anzeigeelemente (53), die über Ausgangsstufen und über eine Logikschaltung (12) mit Sensoren (14a - 14j) verbunden sind, welche die Zustandsgrößen messen und über die Logikschaltung, die die Meßwerte zyklisch abfragt, in Abhängigkeit von den gemessenen Zustandsgrößen Signale in zeitlicher Folge an die Ausgangsstufen der Anzeigeelemente (53) abgeben, dadurch gekennzeichnet,

a) daß jeweils mehrere Anzeigeelemente (53) für jede dieser Zustandsgrößen zu einem Anzeigeblock (15a - k) zusammengefaßt sind,

b) daß die Anzeigeelemente (53) des Anzeigeblocks (15a - k) mit den ihnen zugeordneten Ausgangsstufen in Form von Schieberegistern (50) mit nachgeschalteten Ausgangsverstärkern (52) mit Speicherwirkung dadurch räumlich vereinigt sind, daß die Anzeigeblocks (15a - k) auf einer Displayscheibe (10) angeordnet und über Leiterbahnen der Displayscheibe (10) miteinander sowie mit einer einzigen Leitung Informationsleitung 41) verbunden sind,

c) daß die Ausgänge der Schieberegister (50) über die Ausgangsverstärker (52) direkt mit den Anzeigeelementen (16; 53) zusammengeschaltet sind,

d) daß die Schieberegister (50) der Anzeigeblocks (15a - k) zueinander parallel an die Informationsleitung (41) angeschlossen sind, welche eine von der Logikschaltung (12) ausgegebene zyklische Impulsfolge (Ta) führt, die in die Schieberegister (50) eingebbar ist,

e) daß die Impulsfolge (Ta) für jeden Anzeigeblock (15a - k) eine adressierte Impulsgruppe enthält, welche nach ihrer Eingabe in die Schieberegister (50) durch eine Erkennungsschaltung (42, 43, 44) des Anzeigeblocks (15a - k) erfaßt wird und

f) daß dann durch einen Übernahmeimpuls der Erkennungsschaltung der Zustand der Schieberegister (50) von den Ausgangsverstärkern (52) übernommen wird.

2. Schaltungsanordnung nach Anspruch 1, dadurch gekennzeichnet, daß zur Anzeige einer kontinuierlich veränderbaren Zustandsgröße die Anzeigeelemente (53) in Form eines Anzeigebandes nebeneinander angeordnet sind.

3. Schaltungsanordnung nach Anspruch 1, dadurch gekennzeichnet, daß jeder Anzeigeblock (15a - k) als Erkennungsschaltung einen mit der Informationsleitung (41) verbundenen Binärzähler (42) enthält, dessen Ausgänge über eine Gatterschaltung (43, 44) mit einem Zeitglied (54) beim Erreichen eines vorbestimmten Zählerstandes einen Übernahmeimpuls (ü) an die Ausgangsverstärker (52) des schieberegisters (50) abgeben.

4. Schaltungsanordnung nach Anspruch 3, dadurch gekennzeichnet, daß das Schieberegister (50) eines jeden Anzeigeblocks (15a - k) über eine Schaltstufe (47) mit der Informationsleitung (41) verbunden ist und daß die schaltstufe (47) über eine Steuerschaltung (45) an der dem Binärzähler (42) nachgeschalteten Gatterschaltung (43, 44) liegt, die beim Erreichen eines vorbestimmten Zählerstandes die Schaltstufe (47) sperrt.

5. Schaltungsanordnung nach Anspruch 4, dadurch gekennzeichnet, daß der Ausgang der Schaltstufe (47) über eine Umkehrstufe (49) mit dem Takteingang des Schieberegisters (50) und über eine der Umkehrstufe (49) nachgeschaltete Zeitstufe (51) mit dem Informationseingang des Schieberegisters (50) verbunden ist.

6. Schaltungsanordnung nach Anspruch 3, dadurch gekennzeichnet, daß der mit der Informationsleitung (41) verbundene Eingang des Binärzählers (42) über eine Zeitschaltung (55, 56, 57, 58) mit dem Rücksetzeingang des Binärzählers (42) verbunden ist, welche die Pause (p) der Impulsfolge (Ta) zur Rücksetzung des Binärzählers (42) erfaßt.

## Claims

1. Circuit for the optical indication of parameters in a motor vehicle by optoelectric indicating elements (53), which are connected via output stages and via a logic circuit (12) to sensors (14a - 14j), which measure the parameters and, as a function of the measured parameters, emit signals in chronological sequence to the output stages of the indicating elements (53) via the logic circuit, which cyclically inquires the measured values, characterised

a) in that in each case a plurality of indicating elements (53) for each of these parameters are combined into an indicating block (15a - k),

b) in that the indicating elements (53) of the indicating block (15a - k) with the output stages assigned to them in the form of shift registers (50) with downstream output amplifiers (52) with memory effect are spatially combined by the indicating blocks (15a - k) being arranged on a display panel (10) and connected via conductor paths of the display panel (10) to one another as well as to a single line (information line 41),

c) in that the outputs of the shift registers (50) are interconnected directly to the indicating elements (16; 53) via the output amplifiers (52),

d) in that the shift registers (50) of the indicating blocks (15a - k) are connected in parallel with one another to the information line (41), which carries a cyclical pulse sequence (Ta), which is output by the logic circuit (12) and can be input into the shift registers (50),

e) in that the pulse sequence (Ta) for each indicating block (15a - k) includes an addressed pulse group which, after its input into the shift registers (50), is detected by a recognition circuit (42, 43, 44) of the indicating block (15a - k) and

f) in that then, by a take-over pulse of the recognition circuit, the state of the shift registers (50) is taken over by the output amplifiers (52).

2. Circuit according to Claim 1, characterised in that, for the indication of a continuously changeable parameter, the indicating elements (53) are arranged next to one another in the form of an indicating band.

3. Circuit according to Claim 1, characterised in that each indicating block (15a - k) contains as recognition circuit a binary counter (42), which is connected to the information line (41) and the outputs of which emit a take-over pulse (ü) to the output amplifiers (52) of the shift register (50) via a gate circuit (43, 44) with a timing element (54) when a predetermined counter reading is reached.

4. Circuit according to Claim 3, characterised in that the shift register (50) of each indicating block (15a - k) is connected via a switching stage (47) to the information line (41) and in that the switching stage (47) lies via a control circuit (45) at the gate circuit (43, 44), which is downstream of the binary counter (42) and inhibits the switching stage (47) when a predetermined counter reading is reached.

5. Circuit according to Claim 4, characterised in that the output of the switching stage (47) is connected via an inverting stage (49) to the clock input of the shift register (50) and via a timing stage (51), downstream of the inverting stage (49), to the information input of the shift register (50).

6. Circuit according to Claim 3, characterised in that the input of the binary counter (42) connected to the information line (41) is connected via a timing circuit (55, 56, 57, 58) to the resetting input of the binary counter (42), which detects the pause (p) in the pulse sequence (Ta) for resetting the binary counter (42).

## Revendications

1. Dispositif de circuit pour l'affichage optique de grandeurs d'états dans un véhicule automobile par des éléments d'affichage optoélectriques (53), qui, par l'intermédiaire d'étages de sortie et par l'intermédiaire d'un circuit logique (12) sont reliés à des détecteurs (14a à 14j) qui mesurent les grandeurs d'états, et qui, par l'intermédiaire du circuit logique qui interrompt cycliquement les valeurs de mesure, fournissent, en fonction des grandeurs d'états ainsi mesurées, des signaux en successions dans le temps aux étages de sortie des éléments d'affichage (53), dispositif de circuit caractérisé en ce que :

a) plusieurs éléments d'affichage (53) pour chacune de ces grandeurs d'états sont respectivement rassemblés pour constituer un bloc d'affichage (15a à 15k),

b) les éléments d'affichage (53) du bloc d'affichage (15a à 15k) sont partiellement réunis de façon telle, avec les étages de sortie qui leur sont associés sous la forme de registres à décalage (50) et avec des amplificateurs de sortie (52) branchés à la suite, et assurant une fonction de mémorisation, que les blocs d'affichage (15 a à 15k) sont disposés sur une plaque d'affichage (10) et sont reliés entre eux, ainsi qu'avec une liaison unique d'information (41) par l'intermédiaire de pistes conductrices,

c) les sorties des registres à décalage (50) au-delà des amplificateurs de sortie (52) sont branchées directement avec les éléments d'affichage (16; 53).

d) les registres à décalage (50) des blocs d'affichage (15a à 15k) sont raccordés en parallèle les uns par rapport aux autres à la liaison d'information (41) qui transmet une succession cyclique d'impulsions (Ta) émanant du circuit logique (12) et qui est susceptible d'être introduite dans les registres à décalage (50),

e) la succession d'impulsions (Ta) pour chaque bloc d'affichage (15a à 15k) comprend un groupe d'impulsions adressé qui, après son introduction dans les registres à décalage (50) est détecté par un circuit d'identification (42, 43, 44) du bloc d'affichage (15a à 15k),

f) l'état des registres à décalage (50) est alors pris en charge par les amplificateurs de sortie (52) sous l'action d'une impulsion de réception du circuit d'identification.

2. Dispositif de circuit selon la revendication 1, caractérisé en ce que, pour l'affichage d'une grandeur d'état variant de façon continue, les éléments d'affichage (53) sont disposés les uns à côté des autres sous la forme d'une bande d'affichage.

3. Dispositif de circuit selon la revendication 1, caractérisé en ce que chaque bloc d'affichage (15a à 15k) comprend, en tant que circuit d'identification, un compteur binaire (42) relié à la liaison d'information (41), compteur dont les sorties délivrent, par l'intermédiaire d'un circuit de porte (43, 44) avec un organe de temps (54), une impulsion de réception (ü) à l'amplificateur de sortie (52) du registre à décalage (50) lorsqu'un état de comptage prédéterminé est atteint.

4. Dispositif de circuit selon la revendication 3, caractérisé en ce que le registre à décalage (50) de chaque bloc d'affichage (15a à 15k) est relié par l'intermédiaire d'un étage de commutation (47) à la liaison d'information (41) et en ce que l'étage de commutation (47) est relié par l'intermédiaire d'un circuit de commande (45) aux circuits de portes (43, 44) branchés à la suite du compteur binaire (42) et qui bloquent l'étage de commutation (47) lorsqu'un état de comptage prédéterminé est atteint.

5. Dispositif de circuit selon la revendication 4, caractérisé en ce que la sortie de l'étage de commutation (47) est reliée par l'intermédiaire d'un étage d'inversion (49) à l'entrée de synchronisation du registre à décalage (50), et est reliée par l'intermédiaire d'un étage de temps (51), branché à la suite de l'étage d'inversion (49), à l'entrée d'information du registre à décalage (50).

6. Dispositif de circuit selon la revendication 3, caractérisé en ce que l'entrée du compteur binaire (42), reliée à la liaison d'information (41), est reliée par l'intermédiaire d'un circuit de temps (55, 56, 57, 58) à l'entrée de remise à l'état initial du compteur binaire (42), qui détecte la pause (p) de la succession d'impulsions (Ta) pour remettre à l'état initial le compteur binaire (42).

FIG.1

FIG.2

8

FIG.3

FIG.4

FIG.5